# EUROPEAN PATENT APPLICATION

(11) **EP 1 845 724 A1**
(43) Date of publication of application: **17.10.2007**
(21) Application number: 06712611.0
(22) Date of filing: 30.01.2006
(51) Int. Cl.: H04N 5/93, G11B 20/10

(54) **RECORDING/REPRODUCTION DEVICE, RECORDING/REPRODUCTION METHOD, RECORDING/REPRODUCTION APPARATUS AND RECORDING/REPRODUCTION METHOD, AND RECORDING MEDIUM STORING RECORDING/REPRODUCTION PROGRAM, AND INTEGRATED CIRCUIT FOR USE IN RECORDING/REPRODUCTION APPARATUS**

(30) Priority: 03.02.2005 JP 2005027315
(71) Applicant: MATSUSHITA ELECTRIC INDUSTRIAL CO., LTD., Osaka 571-8501 (JP)
(72) Inventor: KAWAMURA, Takashi Matsushita.Ele.Ind CO, Ltd, IMP Bldg 3-7 1-chome, Osaka 540-6319 (JP); MISAKI, Masayuki Matsushita.Ele.Ind CO, Ltd, IMP Bldg 3-7 1-chome, Osaka 540-6319 (JP); MASAKI, Meiko Matsushita.Ele.Ind CO, Ltd, IMP Bldg 3-7 1-chome, Osaka 540-6319 (JP)
(74) Representative: Gassner, Wolfgang
(86) International application number: PCT/JP2006/301468
(87) International publication number: WO 2006/082787

(57) **Abstract**

A broadcast program is recorded into an accumulation unit 11 in accordance with a timer recording set by a user. Next, the user provides an instruction to perform fast playback of the program. An AV analyzing unit 12 analyzes video and audio signals of the recorded program. Next, a speed determining unit 13 determines reproduction speeds of the video and audio signals constituting the program based on a result of the analysis. The audio reproduction speed converting unit 14 and the video reproduction speed converting unit 15 performs fast playback of the video and audio signals based on the determined reproduction speeds.

## Description

### TECHNICAL FIELD

The present invention relates to a recording/reproduction apparatus and a recording/reproduction method, and a recording medium storing a recording/reproduction program. More particularly, the present invention relates to a recording/reproduction apparatus and a recording/reproduction method having a variable-speed reproduction function, and a recording medium storing a recording/reproduction program, and an integrated circuit for use in the recording/reproduction apparatus.

### BACKGROUND ART

Conventionally, there is a recording/reproduction apparatus which reproduces AV data with a predetermined speed (fast or slow playback) without changing an interval. In such a recording/reproduction apparatus, for example, by invariably reproducing audio and video with the same reproduction speed, transition to fast or slow playback can be performed without a sense of discomfort. On the other hand, there is an increasing demand for a higher reproduction speed for efficient view. However, when the reproduction speed is excessively increased, the degree of understanding of sentences is conversely reduced (reproduced speech becomes fast talk which is difficult to recognize). Regarding such a problem, a variable-speed reproduction method is known which changes a reproduction speed as appropriate, depending on a speech or non-speech portion. For example, by reproducing speech portions with a lower speed and non-speech portions with a higher speed, high-speed reproduction can be achieved without reducing the understanding of a sentence (e.g., Patent Document 1).

Even when real-time reproduction is required (e.g., television broadcasting), variable-speed reproduction is effectively used. Specifically, in order to improve the degree of understanding of sentences in television-broadcast speech mainly for older persons, a method is known in which speech portions are reproduced at a reduced reproduction speed (slow playback), and non-speech portions are reproduced at an increased speed (fast playback), so that both real-time reproduction and clear reproduction can be achieved in a television which does not have a large-capacity storage device. In such a method, the speed of a video signal may be either a fixed speed or a speed following a change in the speed of speech (e.g., Patent Document 2).

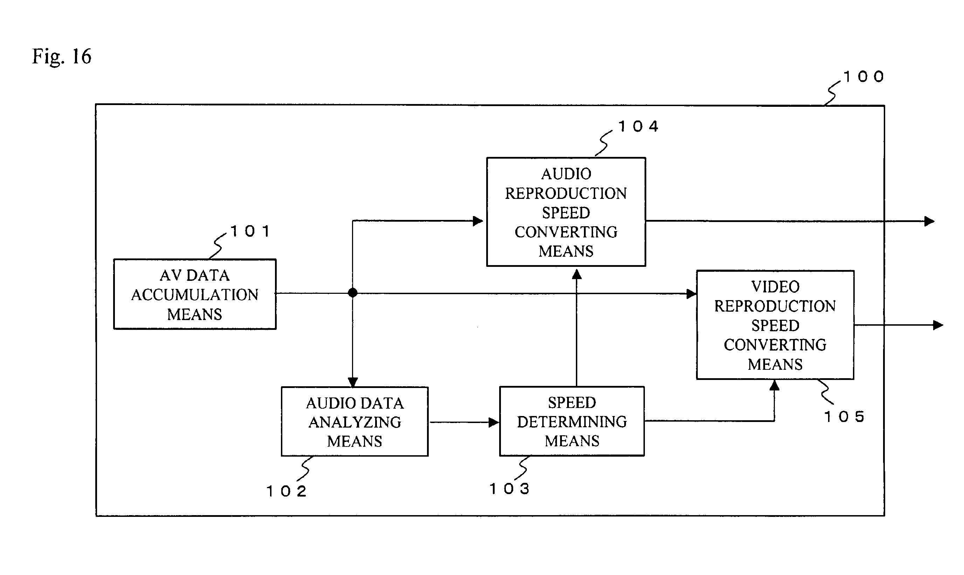

The configuration of a conventional recording/reproduction apparatus as described above will be described with reference to FIG. 16. FIG. 16 is a block diagram illustrating the configuration of the conventional recording/reproduction apparatus. In FIG. 16, an AV data accumulating means 101 accumulates AV data. Specific examples of the AV data accumulating means 101 include large-capacity disc media (hard disks, DVDs, etc.), semiconductor memories, and the like. An audio data analyzing means 102 analyzes only audio portions of the AV data accumulated in the AV data accumulating means 101. The analysis performed by the audio data analyzing means 102 includes speech/non-speech determination of an audio signal, and the like. The speed determining means 103 determines reproduction speeds of audio and video based on the result of the analysis of the audio data analyzing means. As the speed determining method performed by the speed determining means 103, for example, there is a method in which, based on the result of the speech/non-speech determination, a 1.3-times speed at which speech is relatively recognizable is set to speech sections, and a 4-times speed which puts importance on high speed is set to non-speech sections. Also, there is a method in which, based on a ratio of times occupied by the speech sections and the non-speech sections, speeds are set or adaptively controlled to the speech sections and the non-speech sections so that the speed falls within a target speed (e.g., a 2-times speed). Note that, also in this case, a speed at which speech is recognizable is set to the speech sections and a speed which puts importance on high speed is set to the non-speech sections. An audio reproduction speed converting means 104 adaptively changes the reproduction speed of an audio signal read out from the AV data accumulating means 101, without changing an interval, based on the reproduction speed determined by the speed determining means 103. Specific examples of the speech speed converting method include PICOLA which achieves time-axis compression and decompression by performing pitch detection and a crossfade process, OLA which achieves time-axis compression and decompression by regularly performing a crossfade process for ten milliseconds to several tens of milliseconds, SOLA which achieves sound quality having a smooth crossfade portion by adding a correlation process to OLA, and the like. An image reproduction speed converting means 105 converts the reproduction speed of a video signal read out from the AV data accumulating means 101, based on the video reproduction speed determined by the speed determining means 103. Examples of the speed control method performed by the image reproduction speed converting means 105 include a control method of causing the image reproduction speed to follow the same speed as that of the audio reproduction speed converting means 104, a control method of keeping the image reproduction speed constant at an average speed (the above-described target speed) or a minimum speed (the 1.3-times speed in the above-described case), and the like.

In recording/reproduction apparatuses having configurations as described above, by analyzing audio, and changing a reproduction speed, depending on the speech and non-speech portions (e.g., reproduction is performed at a lower speed in speech portions, and reproduction is performed at a higher speed in non-speech portions), fast playback can be performed without reducing the degree of understanding of sentences, resulting in efficient viewing.
Patent Document 1: Japanese Patent Laid-Open Publication No. 2001-290500
Patent Document 2: Japanese Patent Laid-Open Publication No. 2001-298710

### DISCLOSURE OF THE INVENTION

### PROBLEMS TO BE SOLVED BY THE INVENTION

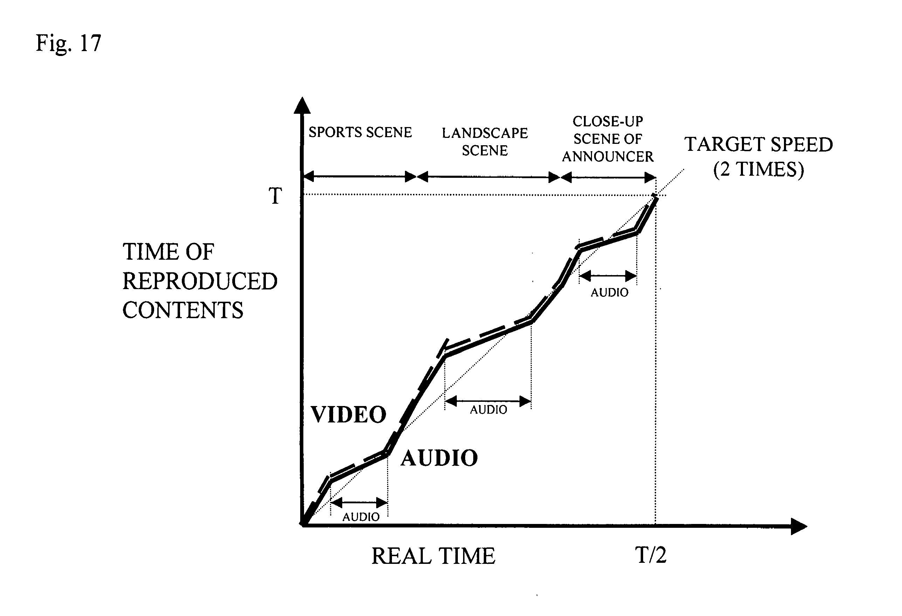

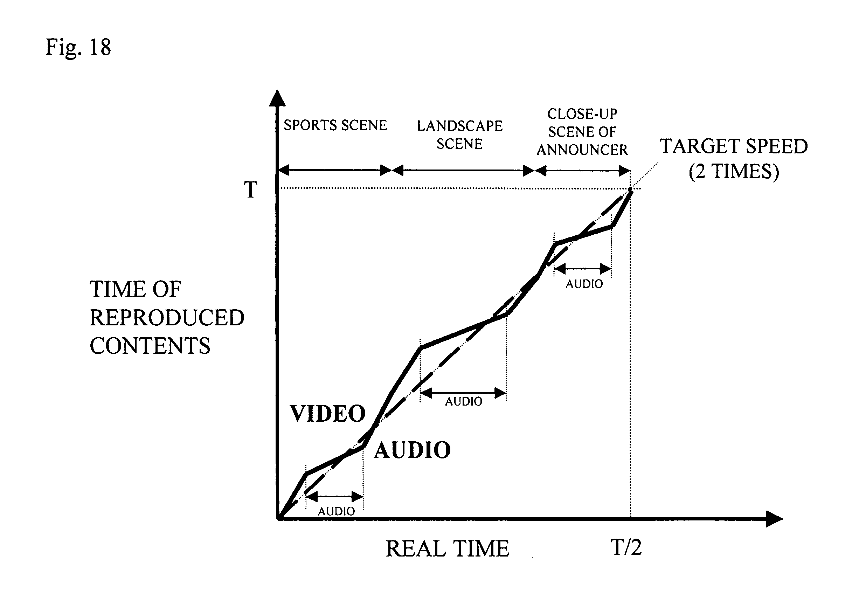

However, in recording/reproduction apparatuses as described above, the video reproduction speed is inevitably either caused to follow an audio reproduction speed or fixed to a predetermined speed. Therefore, for example, in the former case, the video reproduction speed is frequently changed as the audio reproduction speed varies depending on speech and non-speech sections. As a result, motions become less smooth in scenes including significant motions (sports, etc.), scenes which pan across a landscape, and the like, so that the user has a sense of discomfort. FIG. 17 illustrates an exemplary reproduction speed control of video and audio in such a case. The horizontal axis represents a real time required for reproduction, and the vertical axis represents a recording time of reproduced contents. In FIG. 17, the video reproduction speed is caused to follow an audio speed, so that, for example, the video reproduction speed is changed twice in a sports scene, and therefore, video cannot be smoothly viewed. On the other hand, in the latter case, since video is reproduced with a fixed speed, a sense of discomfort is eliminated in sports and landscape scenes, however, a motion of a mouth is deviated from speech in a scene in which an announcer speaks (news programs, etc.). FIG. 18 illustrates an exemplary reproduction speed control of video and audio in such a case. In FIG. 18, for example, in a close-up scene of an announcer, the reproduction speeds of video and audio differ from each other.

Therefore, an object of the present invention is provide a recording/reproduction apparatus and a recording/reproduction method for recording and reproducing television broadcast programs, captured moving images, and the like, in which the reproduction speeds of audio and image are both controlled so that variable-speed reproduction can be achieved without a sense of discomfort.

### SOLUTION TO THE PROBLEMS

To achieve the above objects, the present invention has the following aspects.

A first aspect of the present invention is directed to a recording/reproduction apparatus comprising an AV data accumulation unit for accumulating an audio signal and a video signal, an AV data analyzing unit for analyzing feature amounts of the audio signal and the video signal accumulated in the AV data accumulation unit, a speed determining unit for determining reproduction speeds of the audio signal and the video signal based on the feature amounts of the audio signal and the video signal analyzed by the AV data analyzing unit, an audio h reproduction speed converting unit for changing the reproduction speed of the audio signal based on the audio reproduction speed determined by the speed determining unit, and an image reproduction speed converting unit for changing the reproduction speed of the video signal based on the video reproduction speed determined by the speed determining unit.

In a second aspect based on the first aspect, the AV data analyzing unit performs the analysis when the audio signal and the video signal are accumulated into the AV data accumulation unit, and saves a result of the analysis in association with the audio signal and the video signal, and the speed determining unit determines the reproduction speeds of the audio signal and the video signal based on the result of the analysis.

In a third aspect based on the first aspect, the recording/reproduction apparatus further comprises a time difference calculating unit for calculating a time difference between the audio signal and the video signal being reproduced. The speed determining unit determines a reproduction speed of one of the audio signal and the video signal, depending on the time difference calculated by the time difference calculating unit.

In a fourth aspect based on the second aspect, the recording/reproduction apparatus further comprises an AV synchronizing unit for generating synchronization information for synchronizing the audio signal with the video signal, based on the feature amounts of the audio signal and the video signal analyzed by the AV data analyzing unit. The audio reproduction speed converting unit and the video reproduction speed converting unit synchronize the audio signal with the video signal based on the synchronization information.

In a fifth aspect based on the first aspect, the AV data analyzing unit has a face image detecting unit for detecting a face image from the feature amount of the video signal. The speed determining unit determines the reproduction speed, depending on a result of the detection of the face image.

In a sixth aspect based on the first aspect, the AV data analyzing unit has a motion vector detecting unit for detecting a motion vector from the feature amount of the video signal. The speed determining unit determines the reproduction speed, depending on a result of the detection of the motion vector.

In a seventh aspect based on the first aspect, the speed determining unit outputs, to the image reproduction speed converting unit, a signal indicating an instruction to change a reproduction mode between a first reproduction mode in which the video signal is reproduced at a previously determined reproduction speed, and a second reproduction mode in which the video signal is reproduced at a reproduction speed which is caused to follow the reproduction speed of the audio signal, based on the feature amounts analyzed by AV data analyzing unit, and the image reproduction speed converting unit changes the reproduction speed of the video signal based on a reproduction mode designated by the speed determining unit.

In an eighth aspect based on the seventh aspect, the AV data analyzing unit has a face image detecting unit for determining a face image from a feature amount of a video signal. The speed determining unit outputs, to the image reproduction speed converting unit, a signal indicating an instruction to reproduce a video signal in which the face image has not been detected in the first reproduction mode, and reproduce a video signal in which the face image has been detected in the second reproduction mode.

In a ninth aspect based on the seventh aspect, the AV data analyzing unit has a motion vector detecting unit for detecting a motion vector of video from a feature amount of a video signal. The speed determining unit outputs, to the image reproduction speed converting unit, a signal indicating an instruction to reproduce a video signal in which the motion vector has a predetermined value or more in the first reproduction mode, and reproduce a video signal in which the motion vector has the predetermined value or less in the second reproduction mode.

A tenth aspect of the present invention is directed to a recording/reproduction method comprising an AV data accumulation step of accumulating an audio signal and a video signal, an AV data analyzing step of analyzing feature amounts of the audio signal and the video signal accumulated in the AV data accumulation step, a speed determining step of determining reproduction speeds of the audio signal and the video signal based on the feature amounts of the audio signal and the video signal analyzed in the AV data analyzing step, an audio reproduction speed converting step of changing the reproduction speed of the audio signal based on the audio reproduction speed determined in the speed determining step, and an image reproduction speed converting step of changing the reproduction speed of the video signal based on the video reproduction speed determined in the speed determining step.

An eleventh aspect of the present invention is directed to a recording medium storing a recording/reproduction program for causing a computer of a recording/reproduction apparatus comprising an AV data accumulating unit for accumulating an audio signal and a video signal, to execute an AV data accumulation step of accumulating an audio signal and a video signal, an AV data analyzing step of analyzing feature amounts of the audio signal and the video signal accumulated in the AV data accumulation step, a speed determining step of determining reproduction speeds of the audio signal and the video signal based on the feature amounts of the audio signal and the video signal analyzed in the AV data analyzing step, an audio reproduction speed converting step of changing the reproduction speed of the audio signal based on the audio reproduction speed determined in the speed determining step, and an image reproduction speed converting step of changing the reproduction speed of the video signal based on the video reproduction speed determined in the speed determining step.

A twelfth aspect of the present invention is directed to an integrated circuit for use in a recording/reproduction apparatus comprising an AV data accumulation unit for accumulating an audio signal and a video signal, the integrated circuit comprising an AV data analyzing unit for analyzing feature amounts of the audio signal and the video signal accumulated in the AV data accumulation unit, a speed determining unit for determining reproduction speeds of the audio signal and the video signal separately based on the feature amounts of the audio signal and the video signal analyzed by the AV data analyzing unit, an audio reproduction speed converting unit for changing the reproduction speed of the audio signal based on the audio reproduction speed determined by the speed determining unit, and an image reproduction speed converting unit for changing the reproduction speed of the video signal based on the video reproduction speed determined by the speed determining unit.

### EFFECT OF THE INVENTION

According to the first aspect, both audio and video can be analyzed to control reproduction speeds of both the audio and image separately, depending on scenes.

According to the second aspect, the analysis is performed when audio and video are accumulated, thereby reducing process load during reproduction as compared to when the analysis is performed during reproduction.

According to the third aspect, a difference in reproduction time between speed-converted audio and speed-converted video is measured as appropriate, and the reproduction speed of audio or video is controlled at any time during reproduction so as to prevent the time difference from increasing, thereby making it possible to achieve variable-speed reproduction in which audio and image are prevented from being deviated from each other.

According to the fourth aspect, for example, synchronization information for synchronizing video with audio at a point where scenes are changed, is previously generated prior to reproduction based on the analysis result. By performing reproduction based on the synchronization information, reproduction can be performed while further reducing a sense of discomfort caused by a deviation of synchronization.

According to the fifth aspect, a reproduction speed can be changed, depending on the presence or absence of a face image in a scene. Therefore, for example, in a scene in which a human is speaking, a reproduction speed is slowed, and in the other scenes, a reproduction speed is increased. Thus, a reproduction speed can be adjusted, depending on scenes.

According to the sixth aspect, a reproduction speed can be changed, depending on the significance of a motion in a scene. Therefore, for example, in a scene having a significant motion, a reproduction speed is slowed, and in the other scenes, a reproduction speed is increased. Thus, a reproduction speed can be adjusted, depending on scenes.

According to the seventh aspect, an effect similar to the above-described first aspect is obtained.

According to the eighth aspect, an effect similar to the above-described fifth aspect is obtained.

According to the ninth aspect, an effect similar to the above-described sixth aspect is obtained.

Also, according to recording/reproduction method, the recording medium storing the recording/reproduction program, and the integrated circuit for use in the recording/reproduction apparatus, of the present invention, an effect similar to the above-described first aspect can be obtained.

### BRIEF DESCRIPTION OF THE DRAWINGS

[FIG. 1] FIG. 1 is a block diagram illustrating a hardware configuration of a recording/reproduction apparatus according to an embodiment of the present invention.
[FIG. 2] FIG. 2 is a block diagram illustrating a recording/reproduction apparatus according to a first embodiment of the present invention.
[FIG. 3] FIG. 3 is a flowchart of the recording/reproduction process of the first embodiment of the present invention.
[FIG. 4] FIG. 4 is a flowchart illustrating a detail of a reproduction speed determining process of step S4.
[FIG. 5] FIG. 5 is a flowchart illustrating a detail of an audio speed determining process of step S11.
[FIG. 6] FIG. 6 is a flowchart illustrating a detail of a video speed determining process of step S12.
[FIG. 7] FIG. 7 illustrates an example in which an image reproduction speed is controlled, depending on scenes.
[FIG. 8] FIG. 8 is a block diagram illustrating a recording/reproduction apparatus according to a second embodiment of the present invention.
[FIG. 9] FIG. 9 is a flowchart of the recording/reproduction process of the second embodiment of the present invention.
[FIG. 10] FIG. 10 is a block diagram illustrating a recording/reproduction apparatus according to a third embodiment of the present invention.
[FIG. 11] FIG. 11 is a flowchart of the recording/reproduction process of the third embodiment of the present invention.
[FIG. 12] FIG. 12 is a flowchart of the audio speed determining process of step S11 of FIG. 4.
[FIG. 13] FIG. 13 is a block diagram illustrating a recording/reproduction apparatus according to a fourth embodiment of the present invention.
[FIG. 14] FIG. 14 is a flowchart of the recording/reproduction process of the fourth embodiment of the present invention.
[FIG. 15] FIG. 15 is a diagram illustrating an example of a case where a synchronization process is performed to control a reproduction speed.
[FIG. 16] FIG. 16 is a block diagram illustrating the configuration of a conventional recording/reproduction apparatus.
[FIG. 17] FIG. 17 illustrates exemplary reproduction speeds in a conventional recording/reproduction apparatus.
[FIG. 18] FIG. 18 illustrates exemplary reproduction speeds in a conventional recording/reproduction apparatus.

### DESCRIPTION OF THE REFERENCE CHARACTERS

- 1: bus
- 2: CPU
- 3: main memory unit
- 4: secondary memory unit
- 5: operation unit
- 6: display unit
- 7: I/O interface unit
- 10, 20, 30, 40, 100: recording/reproduction apparatus
- 11: accumulation unit
- 12: AV analyzing unit
- 13: speed determining unit
- 14: audio reproduction speed converting unit
- 15: video reproduction speed converting unit
- 21: time difference measuring unit
- 31: AV synchronizing unit
- 101: AV data accumulating means
- 102: audio data analyzing means
- 103: speed determining means
- 104: audio reproduction speed determining means
- 105: image reproduction speed determining means

### BEST MODE FOR CARRYING OUT THE INVENTION

### (First embodiment)

Hereinafter, embodiments of the present invention will be described with reference to the accompanying drawings. Note that the present invention is not limited to the examples.

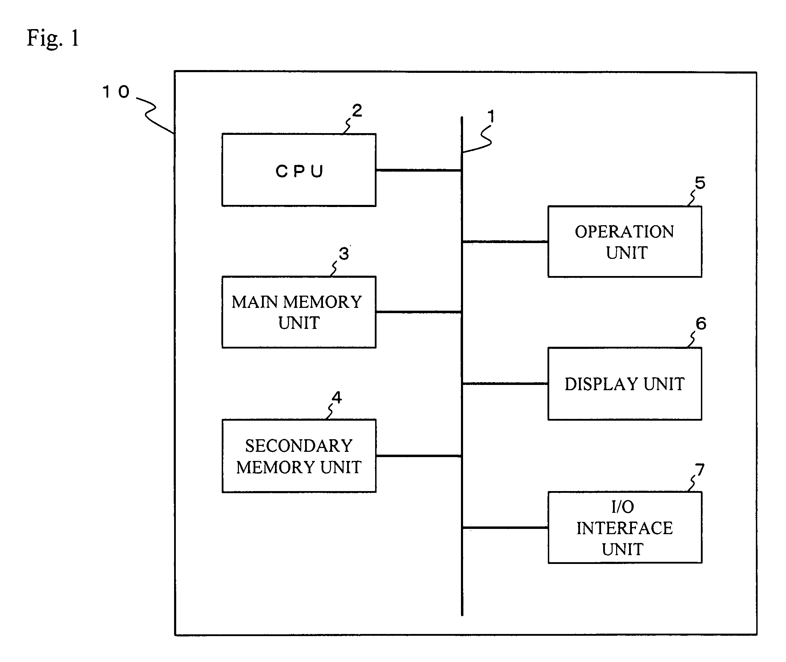

FIG. 1 is a block diagram illustrating a hardware configuration of a recording/reproduction apparatus according to a first embodiment of the present invention. The recording/reproduction apparatus 10 comprises a CPU 2, a main memory unit 3, a secondary memory unit 4, an operation unit 5, a display unit 6, and an I/O interface unit 7, which are connected to each other via a bus 1. The main memory unit 3 is implemented using a memory medium, such as a ROM, a RAM, or the like. Also, a recording/reproduction program which is to be executed by the CPU 2 is read into the main memory unit 3. Note that the recording/reproduction program may be previously stored in the form of ROM in the main memory unit 3, may be read into the main memory unit 3 from the secondary memory unit 4, or may be externally supplied into the main memory unit 3 via a communication line. The CPU 2 executes the recording/reproduction program to perform analysis of audio and video signals (hereinafter referred to as an AV signal), recording and reproduction of an AV signal, and the like. The secondary memory unit 4 is implemented using a memory medium, such as a hard disk, a DVD-RAM, or the like. Also, in the secondary memory unit 4, the recording/reproduction program, various data, and an AV signal (more accurately, AV data obtained by converting the AV signal) are stored. The operation unit 5 is implemented using an operation device, such as a keyboard, a remote controller, or the like. The display unit 6 is implemented using a device, such as a liquid crystal display or the like. The I/O interface unit 7 is implemented using a video output terminal, an S terminal, a loudspeaker terminal, a headphone terminal, or the like. Specifically, the recording/reproduction apparatus 10 is a general-purpose computer (a personal computer, etc.), a digital AV player (a hard disk recorder, a DVD recorder, etc.), or the like which has the above-described hardware configuration.

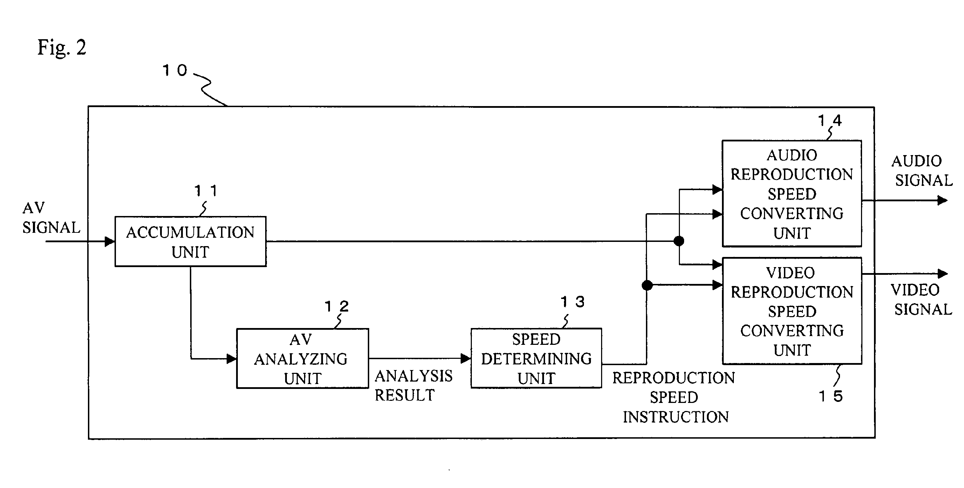

FIG. 2 is a block diagram illustrating an example of the recording/reproduction apparatus 10 of the first embodiment of the present invention. In FIG. 2, the recording/reproduction apparatus 10 is composed of an accumulation unit 11, an AV analyzing unit 12, a speed determining unit 13, an audio reproduction speed converting unit 14, and a video reproduction speed converting unit 15.

The accumulation unit 11 is implemented on the secondary memory unit 4. The accumulation unit 11 stores video data and audio data (hereinafter referred to as AV data) which are obtained by encoding a video signal and an audio signal (e.g., a recorded program, a captured moving image, etc.) in the form of MPEG or the like.

The AV analyzing unit 12 analyzes video and audio signals accumulated in the accumulation unit 11. The analysis includes detection of a speech section and a non-speech section, and the like in the case of audio signals; and detection of a face, detection of a luminance, detection of a motion vector, and the like in the case of video signals. Also, the AV analyzing unit 12 outputs a result of the analysis to the speed determining unit 13.

The speed determining unit 13 determines reproduction speeds of the video and audio signals based on the result of the analysis by the AV analyzing unit 12. Also, the speed determining unit 13 notifies the audio reproduction speed converting unit 14 and the video reproduction speed converting unit 15 of the determined reproduction speeds. Also, the speed determining unit 13 outputs to the video reproduction speed converting unit 15 an instruction to perform reproduction with frame dropping (described below). The audio reproduction speed converting unit 14 converts the audio signal accumulated in the accumulation unit 11 based on the reproduction speed notified of by the speed determining unit 13, and outputs the result to the I/O interface unit 7. Similarly, the video reproduction speed converting unit 15 converts the video signal accumulated in the accumulation unit 11 based on the reproduction speed notified of by the speed determining unit 13, and outputs the result to the I/O interface unit 7. Also, the video reproduction speed converting unit 15 receives the instruction from the speed determining unit 13 and controls the frame dropping reproduction (described below).

Note that the AV analyzing unit 12, the speed determining unit 13, the audio reproduction speed converting unit 14, and the video reproduction speed converting unit 15 of FIG. 2 may be typically implemented using an LSI (integrated circuit). Each of these may be separately mounted on one chip, or the whole or a part thereof may be mounted on one chip. The integrated circuit is not limited to LSI. The integrated circuit may be achieved by a dedicated circuit or a general-purpose processor. Further, an FPGA (Field Programmable Gate Array) which can be programmed after LSI production or a reconfigurable processor in which connection or settings of circuit cells in LSI can be reconfigured, may be used. Furthermore, if an integrated circuit technology which replaces LSI is developed by an advance in the semiconductor technology or the advent of other technologies derived therefrom, the functional blocks may be packaged using such technologies. A biotechnology may be applicable. Note that, regarding implementation using LSI (such an integrated circuit), the same is true of a second embodiment and thereafter (described below).

Here, an operation of the recording/reproduction apparatus 10 of the first embodiment will be roughly described. Initially, a broadcast program which is received by a reception unit (not shown) is recorded into the accumulation unit 11 in accordance with a timer recording or the like set by a user. Next, the user provides an instruction to perform fast playback of the program. The AV analyzing unit 12 analyzes feature amounts of video and audio signals of the recorded program. Next, the speed determining unit 13 determines reproduction speeds of the video and audio signals constituting the program based on a result of the analysis. Based on the reproduction speeds thus determined, the video signal and the audio signal are reproduced.

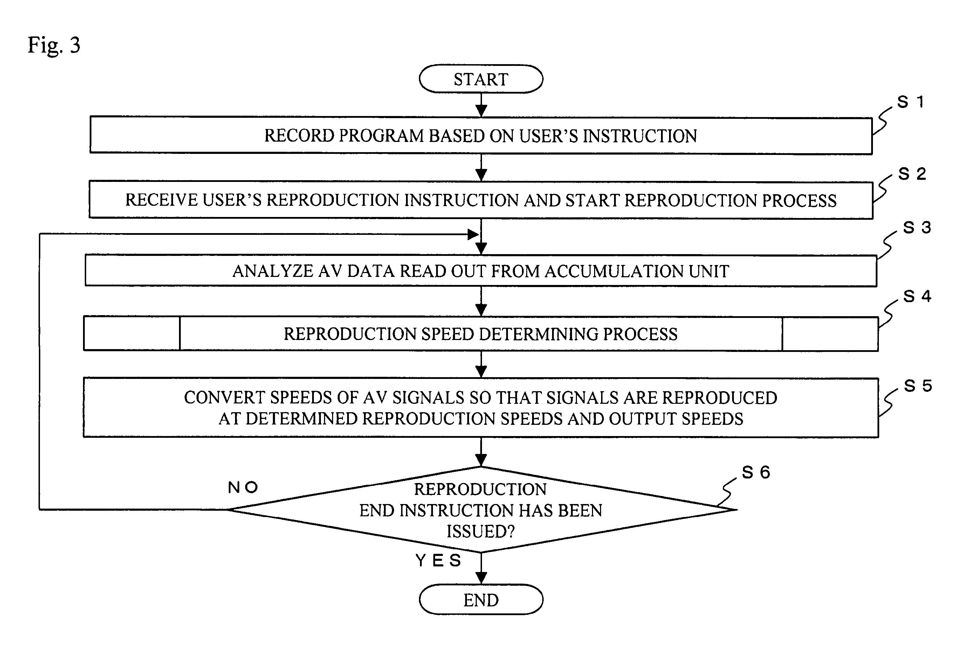

Hereinafter, a detailed operation of a recording/reproduction process performed by the recording/reproduction apparatus 10 will be described with reference to FIGS. 3 to 7. FIG. 3 is a flowchart of the recording/reproduction process of the first embodiment. In FIG. 3, initially, the CPU 2 records a program into the accumulation unit 11 in accordance with a recording instruction or the like from the user (step S1). Next, when receiving the instruction to reproduce the recorded program from the user, the CPU 2 causes the AV analyzing unit 12, the audio reproduction speed converting unit 14, and the video reproduction speed converting unit 15 to start reading out the designated program from the accumulation unit 11 (step S2). In this case, the user may designate a target time required until the end of reproduction of the program to be reproduced, or the like. For example, reproduction may be started in accordance with an instruction to reproduce a 60-minute program in 30 minutes. Here, data read out from the accumulation unit 11 is read out in an amount corresponding to 5 seconds per time and is subjected to each process described below.

Next, the AV analyzing unit 12 analyzes the program video and audio data read out from the accumulation unit 11, and outputs a result of the analysis to the speed determining unit 13 (step S3). The process of step S3 will be more specifically described. The AV analyzing unit 12 analyzes each image frame constituting the video data of the video and audio data thus read out, with respect to image feature amounts, such as an image luminance, the presence or absence of a face image, a motion vector, a scene change point, and the like. Similarly, the audio data is also analyzed with respect to audio feature amounts, such as whether the audio data is speech or non-speech, how much is an S/N ratio (S: speech, N: other sounds), or the like. Thereafter, the AV analyzing unit 12 associates a time stamp of the analyzed image and audio data with information about each feature amount of the image and audio, and outputs them as a result of the analysis to the speed determining unit 13.

Here, the luminance detection in the video feature amount analysis refers to detection of a luminance of an image frame at some time. For example, luminance information itself of each image frame may be detected, or the presence or absence of a scene in which there is a significant change in luminance between image frames within a predetermined time may be detected using a threshold value. The face image detection refers to detection of the face of a human from an image frame at some time. This is achieved based on color difference information, the roundness of a contour, or the like in addition to the image frame luminance. Note that, regarding the face image detection, the "presence/absence" of a face image may be output as a result of the analysis based on a proportion of a face occupying an image frame, and in addition, the "possibility" of a face image may be output as a result of the analysis (e.g., the possibility is indicated by the value (e.g., 75%) of a probability that a face image is present, etc.). The motion vector detection refers to detection of a motion vector indicating the significance of a motion in video. Also, the scene change point refers to a point at which scenes are changed in a program (e.g., in a news program, a scene on location is changed to a close-up scene of an announcer, etc.), and it may be estimated that scenes are changed, when the amount of change over time in luminance is significant.

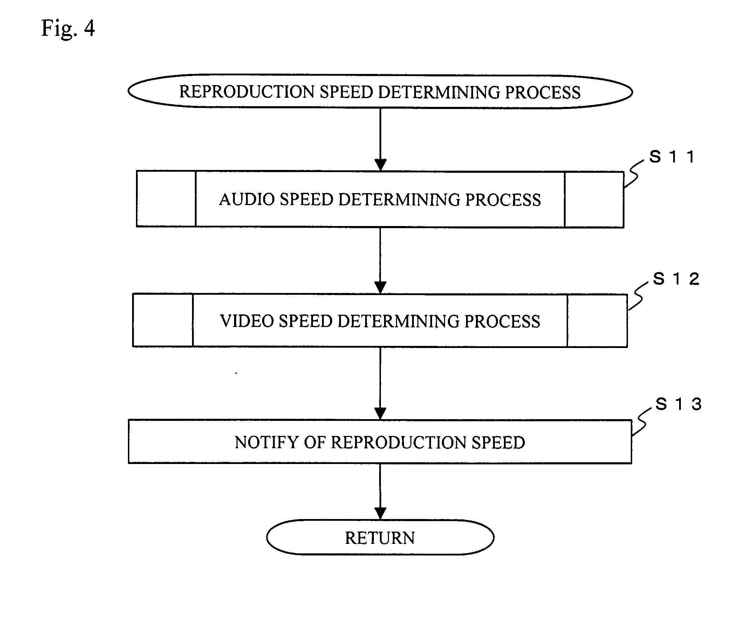

Next, the speed determining unit 13 determines a reproduction speed of each of the audio signal and the video signal based on the analysis result output by the AV analyzing unit 12, and notifies the audio reproduction speed converting unit 14 and the video reproduction speed converting unit 15 of the determined audio reproduction speed and video reproduction speed (step S4). The process of step S4 will be more specifically described with reference to FIGS. 4 to 6. FIG. 4 is a flowchart illustrating a detail of the reproduction speed determining process of step S4. In FIG. 4, initially, the speed determining unit 13 performs an audio speed determining process (step S11). Regarding the determination of an audio speed, for example, a 4-times speed which puts importance on high speed may be set to non-speech sections, and a 1.3-times speed which is recognizable may be set to speech sections.

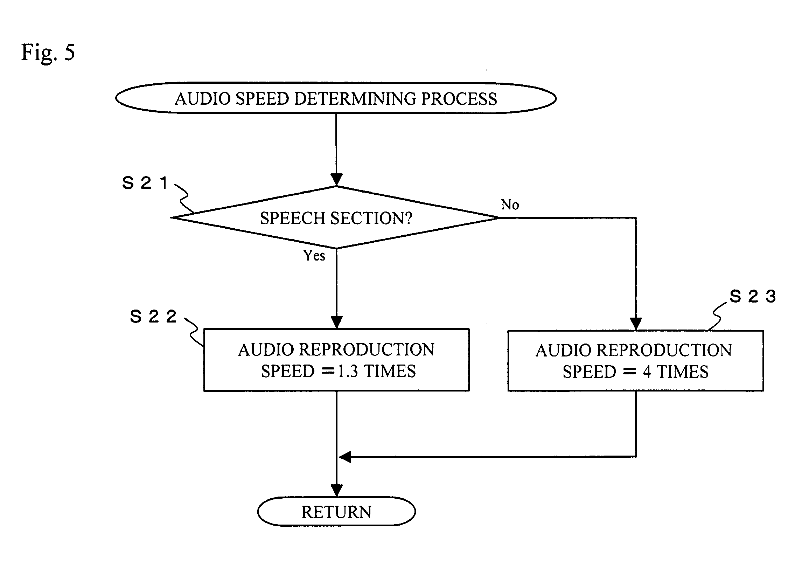

FIG. 5 is a flowchart of the audio speed determining process of the above-described step S11. In FIG. 5, initially, the speed determining unit 13 references the analysis result to determine whether or not a section to be processed is a speech section (step S21). As a result, if the section to be processed is a speech section (YES in step S21), the speed determining unit 13 sets the audio reproduction speed of the section to be the 1.3-times speed (step S22). On the other hand, if the section to be processed is a non-speech section (NO in step S21), the speed determining unit 13 sets the audio reproduction speed of the section to be the 4-times speed (step S23). Thus, the audio speed determining process is completed.

Referring back to FIG. 4, when the audio speed determining process of step S11 is finished, the speed determining unit 13 performs a video speed determining process (step S12). Regarding a method of determining a video reproduction speed, which is performed in step S12, for a scene in which a face image has been detected as a result of the above-described analysis, the reproduction speed of the video signal may be caused to follow the audio signal. For example, this is applied to a scene in which an announcer reads news in a news program, and the like. Also, when it is determined that a scene includes a significant motion, based on the total sum of motion vectors in video within a predetermined time, a fixed speed (e.g., the 2-times speed) is set separately from the reproduction speed of the audio signal. This is because, for example, in action scenes of motion pictures and the like, if audio is caused to follow the reproduction speed of video, motions may be suddenly quickened or slowed within a series of actions, so that a smooth action cannot be viewed, and therefore, a fixed speed is set. Also, when the total sum of motion vectors is small, but image frames having a vector having a constant direction and magnitude consecutivelyappearfor an arbitrary time, a so-called pan video in which a landscape flows is estimated. Therefore, also in such a case, importance is put on a smooth video motion, so that a fixed speed may be set as described above.

Note that video and audio are asynchronously reproduced in methods in which video is reproduced at a fixed speed as described above. However, in some cases, it is difficult to perform such asynchronous reproduction. For example, in the case of a moving image compressing method, such as MPEG or the like, video and audio streams in the vicinity of the same time are subjected to a multiplexing process and the resultant single stream is recorded into a medium. Therefore, in the case of reproduction, after data is read out from the medium, any one of video and audio streams needs to be buffered in a memory or the like, and needs to be decoded and reproduced with appropriate timing. For some apparatuses, of the above-described processes, due to cost a large-capacity memory may not be held, due to reproduction time management it may not be possible to design asynchronous reproduction itself, and the like. In these cases, a frame dropping reproduction method may be used instead of the above-described asynchronous reproduction. The frame dropping reproduction method refers to a method of displaying a frame or a field at arbitrary intervals, i.e., in an interlaced manner, in the case of moving image reproduction. Inthiscase, timing with which video to be displayed is output may be the same as that of audio (i.e., synchronous output reproduction). Thus, if the frame dropping reproduction method is used, although smooth video is not obtained, video and audio are in synchronization with each other to some extent, so that it is not unnatural compared to when the above-described asynchronous reproduction is used, thereby making it possible to reduce a sense of discomfort for a viewer.

Also, a scene change point may be used to adjust a video reproduction speed so that video and audio are synchronized with each other. For example, in a case where the above-described asynchronous reproduction is applied to a scene having a significant motion, if a scene on location is changed to a close-up scene of an announcer in a studio when reproduction of video lags behind speech, the video of the scene on location is presented while speech of the announcer reading news is presented, so that the user feels a sense of discomfort. Therefore, in such a case, by skipping the video of a lagging scene on location with timing with which scenes are changed (scene change point) so that the video of the announcer is output, an adjustment process of synchronizing video with audio, or the like may be performed.

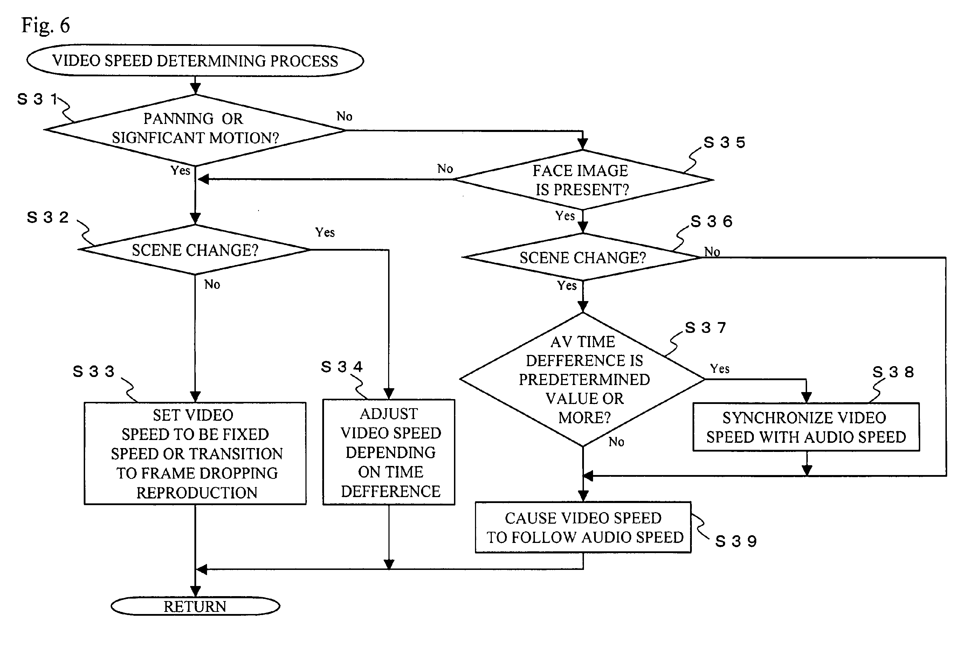

FIG. 6 is a flowchart illustrating an example of the video speed determining process described in the above-described step S12. In FIG. 6, initially, the speed determining unit 13 determines based on the analysis result whether or not an image to be processed is a pan video or a scene having a significant motion (step S31). As a result, when the image to be processed is a pan video or a scene having a significant motion (YES in step S31), the speed determining unit 13 references the analysis result to determine whether or not the scene to be processed is at a scene change point (step S32). As a result of the determination, if the scene to be processed is not at a scene change point (NO in step S32), a previously designated fixed speed (e.g., the 2-times speed) is determined as a video reproduction speed. Alternatively, previously designated frame dropping reproduction of video is performed while video follows (is in synchronization with) an audio reproduction speed (step S33). On the other hand, when the scene to be processed is at a scene change point (YES in step S32), an image speed is determined, depending on a time difference between audio and video to be reproduced at that time, so that a time difference therebetween is reduced (e.g., when reproduction of audio has preceded more, the image reproduction speed is caused to be faster than the current speed) (step S34).

On the other hand, as a result of the determination in step 31, if the scene to be processed is neither a pan video nor a scene having a significant motion (NO in step S31), the speed determining unit 13 determines based on the analysis result whether or not a face video is present (step S35). As a result, when a face image is not present (NO in step S35), the flow goes to the process of step S32. On the other hand, when a face image is present (YES in step S35), it is determined whether or not it is a scene change point (step S36). As a result of the determination in step S36, when it is not a scene change point (NO in step S36), the image speed is set to be a speed which follows the audio speed (step S39). On the other hand, as a result of the determination in step S36, when it is a scene change point (YES in step S36), it is determined whether or not the time difference between audio and video to be reproduced is larger than or equal to a predetermined value (step S37). As a result of the determination, if the time difference is larger than or equal to the predetermined value (YES in step S37), the reproduction speed of an image is adjusted to be synchronized with audio. For example, the image speed is set so that, when reproduction of video lags, a lagging video portion is skipped, or when the video reproduction has preceded more, the video reproduction is temporarily stopped until audio catches up with video (step S38). On the other hand, if the time difference is smaller than or equal to the predetermined value, the speed determining unit 13 goes to the process of the above-described step 539. Thus, the video speed determining process is completed.

Referring back to FIG. 4, after the video speed determining process of step S12 is finished, the speed determining unit 13 notifies the audio reproduction speed converting unit 14 of the audio reproduction speed determined in the above-described step S11. In addition, the speed determining unit 13 notifies the video reproduction speed converting unit 15 of the video reproduction speed determined in the above-described step S12. Thus, the reproduction speed determining process is completed.

Referring back to FIG. 3, when the speed determining process of step S4 is finished, the CPU 2 causes the audio reproduction speed converting unit 14 to perform a audio signal speed converting and outputting process. In addition, the CPU 2 causes the video reproduction speed converting unit 15 to perform a video signal speed converting and outputting process (step S5). The process of step S5 will be more specifically described. Initially, the audio reproduction speed converting unit 14 decodes audio data read out from the accumulation unit into an audio signal. Thereafter, the audio reproduction speed converting unit 14 converts the audio signal into a reproduction speed based on the audio reproduction speed notified of by the speed determining unit 13, and outputs the result to the I/O interface unit 7. In addition, the video reproduction speed converting unit 15 decodes video data read out from the accumulation unit into a video signal. Thereafter, the video reproduction speed converting unit 15 converts the video signal into a reproduction speed based on the video reproduction speed notified of by the speed determining unit 13, and outputs the result to the I/O interface unit 7. Thus, the recording/reproduction process of the first embodiment is completed.

Thus, in the first embodiment, video and audio of each program recorded in the accumulation unit 11 are analyzed to determine reproduction speeds, so that the reproduction speeds of both the audio and image are adaptively controlled, depending on scenes, thereby achieving variable-speed reproduction without a sense of discomfort.

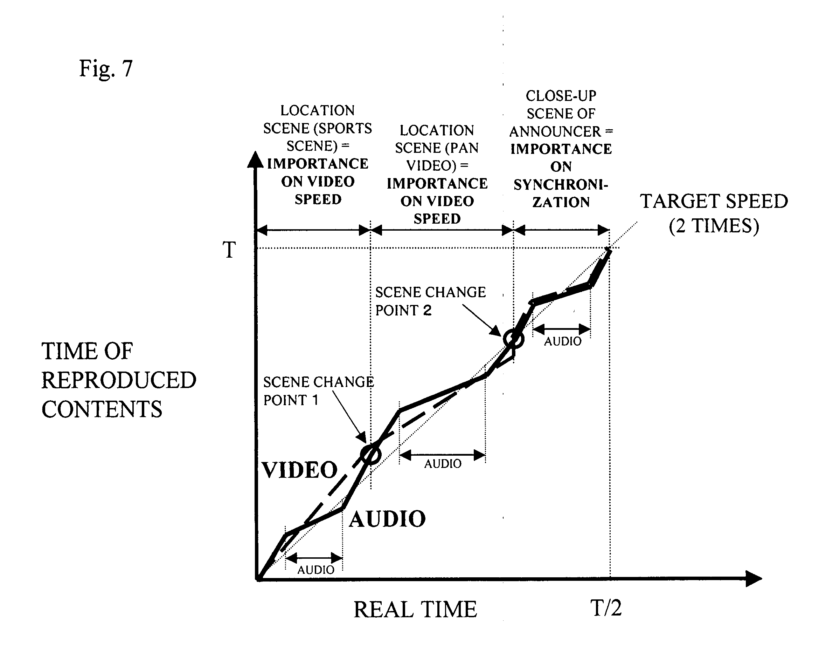

FIG. 7 illustrates an example in which the image reproduction speed is controlled, depending on scenes, so that a reproduction time for some program is finally reduced to the half (i.e., the target speed is the 2-times speed). In FIG. 7, the horizontal axis represents a real time required for reproduction, and the vertical axis represents a recording time of reproduced contents. A program to be reproduced is roughly composed of three scenes: a location scene having a significant motion (hereinafter referred to as a scene 1); a location scene including pan video (hereinafter referred to as a scene 2); and a close-up scene in which a speaking announcer is closed up (a face image is detected) (hereinafter referred to as a scene 3). In FIG. 7, for example, in the scenes 1 and 2, regarding audio, the reproduction speed is caused to be slower in speech sections, and the reproduction speed is caused to be faster in non-speech sections than the reproduction speed in speech sections. Also, regarding video, in order to cause a video motion to be smooth and recognizable, a control is performed so that the video reproduction speed may be held constant, or frame dropping reproduction is performed. On the other hand, in the scene 3, the video reproduction speed is controlled so as to follow the audio reproduction speed. At a point where the scene 2 is changed to the scene 3 (scene change point 2), audio and video are synchronized with each other by skipping video whose reproduction lags. As a result, in the scene 3, the scene can be viewed from the start point in time while audio and video are being synchronized with each other (the motion of the mouth of an announcer matches the announcer's speech).

Note that, regarding the determination threshold value for the face image detection performed by the AV analyzing unit 12, not only the determination threshold value is fixedly set in a program which is being reproduced, but also the determination threshold value may be a variable threshold value which may be changed at any time during reproduction. For example, the significance of a motion is determined based on the detected motion vector, and if there is a scene having a significant motion (it is considered to be less possible that a person is speaking), a threshold value is set with which a face image is not likely to be detected, and when there is a scene which does not have a significant motion (it is considered to be more possible that a person is speaking), a threshold value may be set with which a face image is likely to be detected. Also, for example, in the case of video which pans across a landscape (hereinafter referred to as pan video), if face images are indiscriminately detected, the video reproduction speed is quickened or slowed in a succession of pan video, so that the reproduction speed is changed more frequently than necessary. Therefore, in the case of pan video, a threshold value may be set with which a face is not likely to be detected. Also, for example, when the proportion of speech sections occupying within a predetermined time is large, and an S/N ratio of speech to non-speech is large, it is considered to be highly possible that there are speakers (i.e., two or more) in a screen. Therefore, also in such a case, a threshold value is considered to be set with which a face image is likely to be detected. Also, the genre or the like of a program to be recorded is previously checked using an electronic program guide or the like, and analysis may be performed, taking the genre of the program into consideration. For example, in news programs and the like, the proportion of the image area occupied by the face of an announcer does not vary much. Therefore, the determination threshold value used for the above-described face detection may be a fixed value.

Also, in the audio feature amount analysis performed in the above-described step S3, non-speech thus determined may be categorized into clap, acclamation, noise, or the like using an audio signal estimating method based on a HMM (Hidden Markov Model) or a GMM (Gaussian Mixture Model), and in step S4, based on the resultant category, the audio reproduction speed may be determined.

Also, the audio reproduction speed determined in the above-described step S22 or S23 is not limited to 1.3 times or 4 times, and may be adaptively set, depending on a situation at that time. For example, when the S/N ratio is poor, it is generally considered that speech has less quality and is not recognizable. In such a case, the reproduction speed of speech sections may be set to be low so as to cause speech to be recognizable. Also, times of speech and non-speech are previously accumulated, and based on, for example, the ratio of the speech time to the non-speech time before determination of a reproduction speed, the speed may be adaptively determined so that a whole program can be reproduced in a target time previously set. For example, assuming that reproduction is started in accordance with an instruction to reproduce a 60-minute program in 30 minutes, at the time when an elapsed time in the program reaches 20 minutes, it is calculated whether or not the program is completely reproduced within 30 minutes with a current speed setting, based on a reproduction speed at that time and a ratio of speech sections and non-speech sections for the 20 minutes (e.g., when speech sections occupy 15 minutes of the 20 minutes, it is highly possible that speech sections occupy longer time in the future, etc.). When the program cannot be completely reproduced within 30 minutes, the audio reproduction speed in non-speech sections may be further increased, or the like.

Regarding the determination of a video reproduction speed in the above-described step S12, an electronic program guide or the like may be used to previously check the genre of a recorded program, and the video reproduction speed may be determined, taking the genre of the program into consideration. For example, for news programs, the video reproduction speed is in principle set to follow the audio reproduction speed. For sports programs, variety programs, and the like, the video reproduction speed may be in principle set to be fixed to, for example, the 2-times speed. Also, the "possibility" that a face image is output as a result of the above-described analysis result, may be used. For example, if the "possibility" of a face image is 80% or more and a scene has a significant motion, the speed may be determined to be 1.5 times. If the "possibility" of a face image is 30% and a scene has a significant motion, the speed may be determined to be 3 times.

Further, regarding the determination of the video reproduction speed, the recording/reproduction apparatus 10 may be provided with two video reproduction modes: a first reproduction mode in which video is reproduced at a previously designated speed; and a second reproduction mode in which video is reproduced at a speed which follows the audio reproduction speed. In this case, the speed determining unit 13 instructs the video reproduction speed converting unit 15 to change the two video reproduction modes based on the above-described analysis result. Thereafter, based on the instruction, the video reproduction speed converting unit 15 may change the video reproduction modes at any time and output video.

### (Second embodiment)

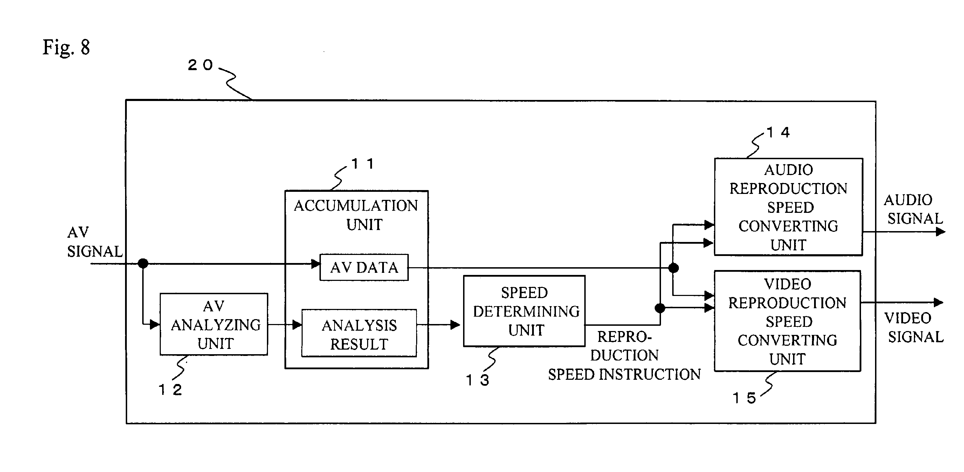

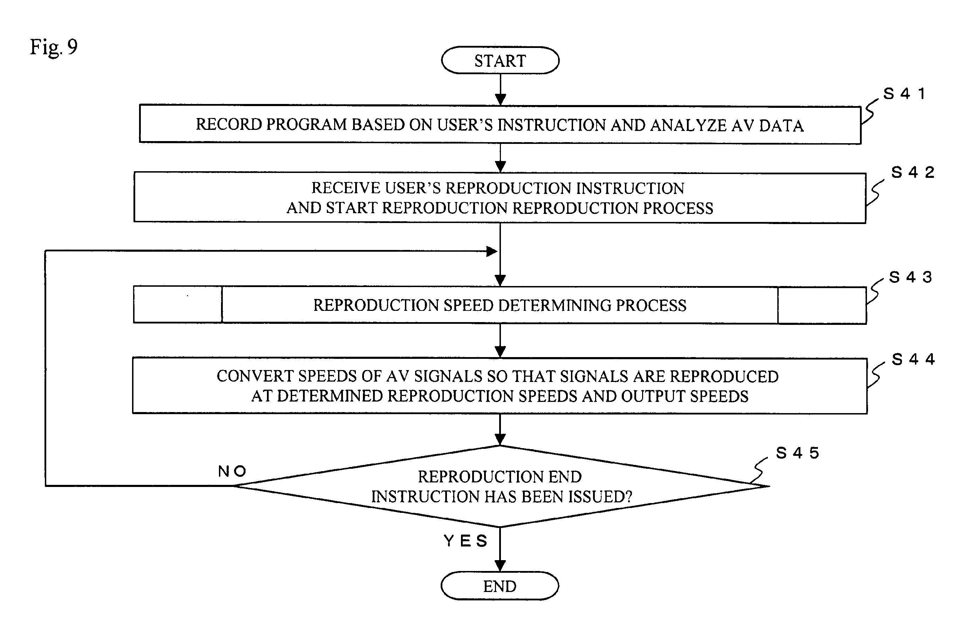

Next, a second embodiment of the present invention will be described with reference to FIGS. 8 and 9. In the above-described first embodiment, video and audio are analyzed when a program is reproduced. In contrast to this, in the second embodiment, when a program is recorded, video and audio are analyzed, and the result of the analysis is saved. Note that a recording/reproduction apparatus 20 of this embodiment is similar to the recording/reproduction apparatus 10 of the above-described first embodiment described with reference to FIG. 1, so that the same parts are indicated with the same reference numerals and will not be described in detail.

FIG. 8 is a block diagram illustrating a configuration of the recording/reproduction apparatus20ofthesecond embodiment of the present invention. In FIG. 8, the AV analyzing unit 12 performs an analysis process similar to that of the above-described first embodiment, and saves the analysis result into the accumulation unit 11. Also, the speed determining unit 13 reads out the analysis result saved in the accumulation unit 11, and performs a reproduction speed determining process (see FIG. 4).

Hereinafter, a detailed operation of the recording/reproduction process of the second embodiment of the present invention will be described with reference to FIG. 9. FIG. 9 is a flowchart illustrating a recording/reproduction process according to the second embodiment. In FIG. 9, initially, the CPU 2 records a program into the accumulation unit 11 based on a recording instruction from the user, or the like. In addition, the CPU 2 causes the AV analyzing unit 12 to start an audio /video analyzing process. The AV analyzing unit 12 analyzes audio and video, and saves the result into an accumulation unit in association with the recorded program (step S41). Note that the analysis process here performed is similar to the analysis process of step S3 which has been described in the first embodiment with reference to FIG. 3. Note that a subject to be analyzed may be video and audio signals of a program to be recorded which is before being converted into MPEG or the like and is then recorded into the accumulation unit 11, or may be AV data after being recorded into the accumulation unit 11.

Next, the CPU 2 receives an instruction to reproduce a recorded program from the user, and causes the audio reproduction speed converting unit 14 and the video reproduction speed converting unit 15 to read out AV data of the designated program from the accumulation unit. Further, the CPU 2 causes the speed determining unit 13 to perform a reproduction speed determining process (step S42).

Next, the speed determining unit 13 reads out the analysis result of the program to be reproduced, from the accumulation unit 11, and based on the analysis result, determines a reproduction speed of each of an audio signal and a video signal, and notifies the audio reproduction speed converting unit 14 and the video reproduction speed converting unit 15 of the determined audio reproduction speed and video reproduction speed (step S43). Note that the specific contents of the reproduction speed determining process are similar to those of the reproduction speed determining process of the above-described first embodiment (see FIG. 4), and will not be described.

After the process of step S43 is finished, the CPU 2 causes the audio reproduction speed converting unit 14 to perform an audio signal speed converting and outputting process. In addition, the CPU 2 causes the video reproduction speed converting unit 15 to perform a video signal speed converting and outputting process (step S44). The operation of step S44 is similar to that of step S5 which has been described in the first embodiment with reference to FIG. 3, and will not be described in detail. Thus, the recording/reproduction process of the second embodiment is completed.

Thus, in the second embodiment, audio and video are analyzed when a program or the like is recorded, and the analysis result is saved in association with recorded data. Thereby, the analysis process does not need to be performed every time reproduction is performed, thereby making it possible to reduce the process load of the recording/reproduction apparatus when reproduction is performed.

Note that the analysis process is performed when a program is recorded in this embodiment. The analysis process may be performed during an idle time (e. g., a midnight time zone, etc.) in which the recording/reproduction apparatus does not perform a recording/reproduction process, to save the analysis result.

Further, not only the analysis process but also the speed determining process may be performed, and in addition, an instruction of a reproduction speed may be saved into the accumulation unit 11. Thereby, when reproduction is performed, the audio reproduction speed converting unit 14 and the video reproduction speed converting unit 15 may read out only the instruction of a reproduction speed from the accumulation unit 11, and may adjust and output the reproduction speeds of audio and video in accordance with the instruction.

### (Third embodiment)

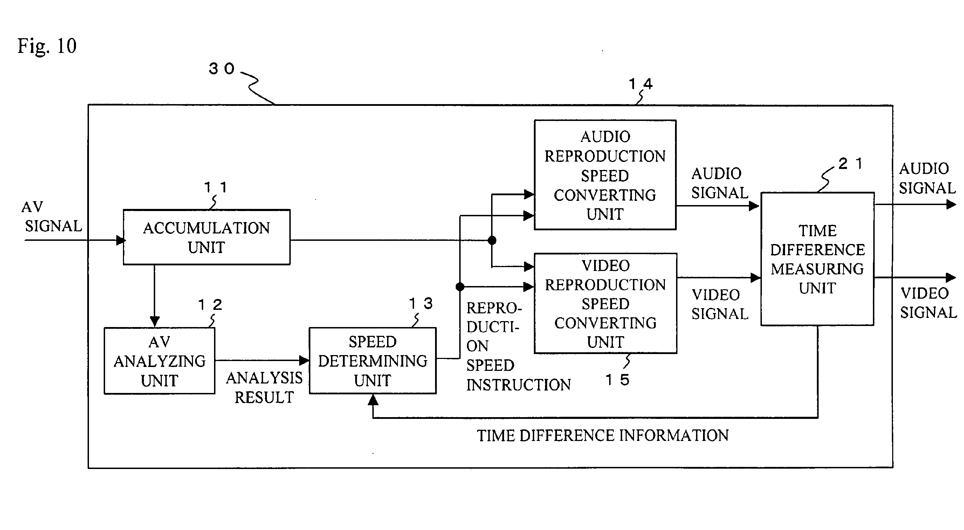

Next, a third embodiment of the present invention will be described with reference to FIGS. 10 to 12. In the third embodiment, a time difference between reproduction times of video and audio after speed conversion is detected. Thereafter, when the detected time difference is larger than or equal to a predetermined value, for example, a reproduction speed in non-speech sections is further increased, or a reproduction speed in speech sections is further slowed, thereby reducing a deviation in reproduction time between video and audio. Note that the recording/reproduction apparatus 30 of this embodiment is similar to the recording/reproduction apparatus 10 which has been described in the first embodiment with reference to FIG. 1, and therefore, the same parts are referenced with the same reference numerals and will not be described in detail.

FIG. 10 is a block diagram illustrating a configuration of the recording/reproduction apparatus 30 of the third embodiment of the present invention. In FIG. 10, the recording/reproduction apparatus 30 basically has the same configuration as that of the recording/reproduction apparatus 10 which has been described in the first embodiment of FIG. 2, except that the recording/reproduction apparatus 30 comprises a time difference measuring unit 21, and the same parts are referenced with the same reference numerals and will not be described in detail. In FIG. 10, the time difference measuring unit 21 measures a time difference between a speed-converted audio output from the audio reproduction speed converting unit 14 and a speed-converted video output from the video reproduction speed converting unit 15, and outputs the time difference as time difference information to the speed determining unit 13.

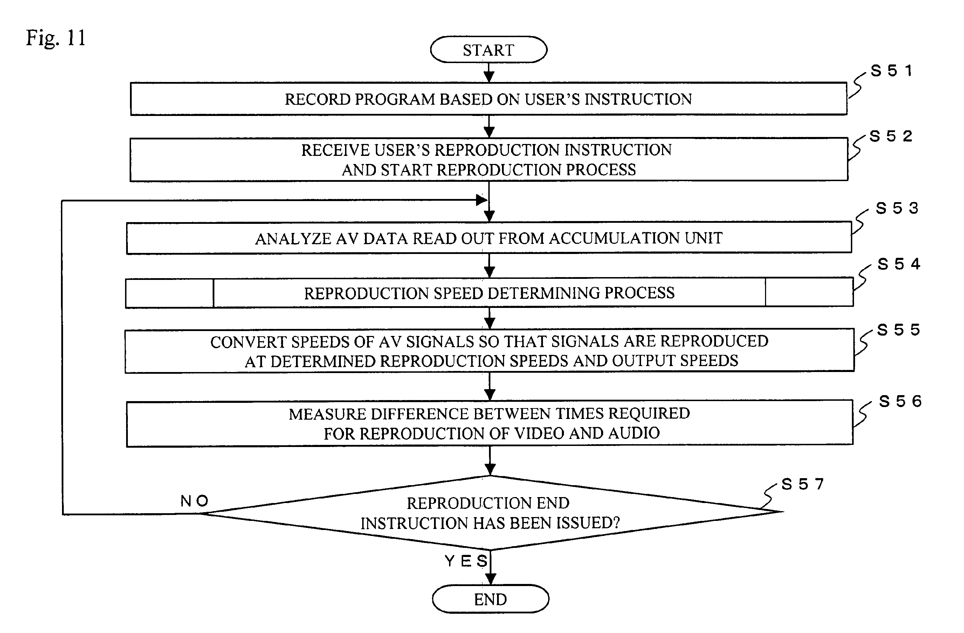

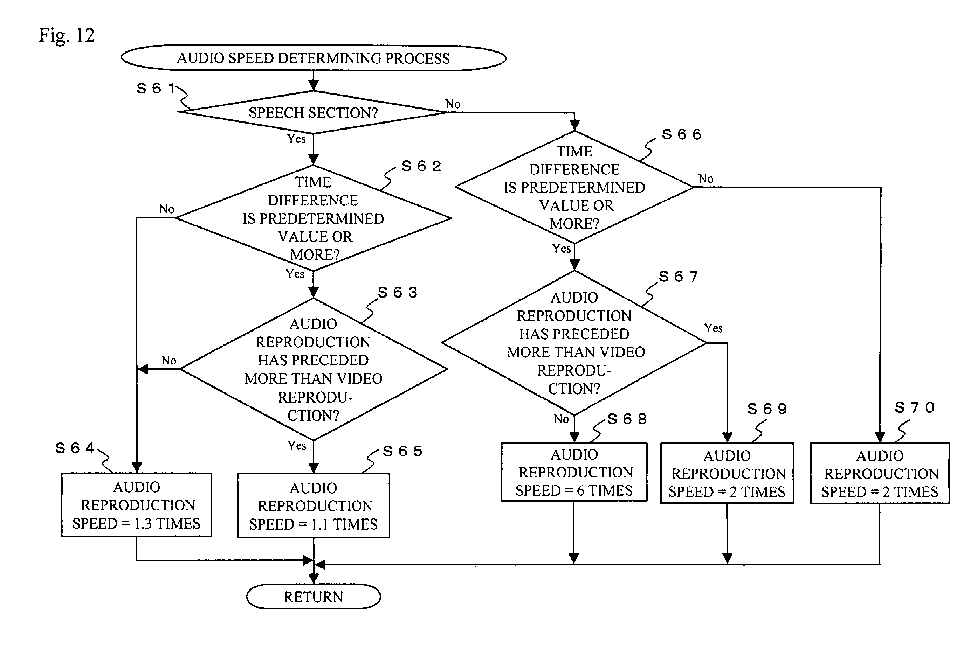

Hereinafter, a detailed operation of the recording/reproduction process of the third embodiment of the present invention will be described with reference to FIGS. 11 and 12. FIG. 11 is a flowchart of the recording/reproduction process of the third embodiment. In FIG. 11, operations in steps S51 to S55 are similar to those of steps S1 to S5 which have been described in the first embodiment with reference to FIG. 3, and will not be described in detail.

Following step S55, the time difference measuring unit 21 measures the time difference between reproduction times of the speed-converted audio output from the audio reproduction speed converting unit 14 and the speed-converted image output from the video reproduction speed converting unit 15, and outputs the time difference as time difference information to the speed determining unit 13 (step S56). For example, the time difference is calculated based on time stamp information which is assigned to each of audio data and image data.

The speed determining unit 13 adjusts the reproduction speeds using the time difference information in a reproduction speed determining process (see FIG. 4) of step S54. For example, when audio has preceded much more than video, the audio reproduction speed is reduced, and when video has preceded much more than audio, the audio reproduction speed is increased. FIG. 12 is a flowchart of an audio speed determining process (corresponding to step S11 of FIG. 4) when the time difference information is used to determine the audio reproduction speed. Note that it is here assumed that a standard speed is set to be 1.3 times in speech sections and 4 times in non-speech sections. In FIG. 12, initially, the speed determining unit 13 references the analysis result to determine whether or not a section to be processed is a speech section (step S61). As a result, if the section to be processed is a speech section (YES in step S61), the speed determining unit 13 references the time difference information to determine whether or not the time difference is larger than or equal to a predetermined value (step S62). When the time difference is less than the predetermined value (i.e., a small deviation between video and audio) (NO in step S62), the speed determining unit 13 determines 1.3 times as the audio reproduction speed (step S64). On the other hand, when the time difference is larger than or equal to the predetermined value (i.e., a large deviation between video and audio) (YES in step S62), the speed determining unit 13 determines whether or not reproduction of audio has preceded more than reproduction of video (step S63). As a result of the determination, when the video reproduction has preceded more than the audio reproduction (NO in step S63), the speed determining unit 13 determines 1.3 times as the audio reproduction speed (step S64). On the other hand, as a result of the determination, when the audio reproduction has preceded more than the video reproduction (YES in step S63), the speed determining unit 13 determines 1.1 times as the audio reproduction speed (step S65). In other words, the audio reproduction speed is decreased so as to reduce the time difference between the audio reproduction and the video reproduction.

On the other hand, as a result of the determination in step S61, when the speed determining unit 13 determines that the section to be processed is a non-speech section (NO in step S61), the speed determining unit 13 references the time difference information to determine whether or not the time difference is larger than or equal to a predetermined value (step S66). When the time difference is less than the predetermined value (NO in step S66), the speed determining unit 13 determines 4 times as the audio reproduction speed (step S70). On the other hand, when the time difference is larger than or equal to the predetermined value (YES in step S66), the speed determining unit 13 determines whether or not reproduction of audio has preceded more than reproduction of video (step S67). As a result of the determination, when the video reproduction has preceded more than the audio reproduction (NO in step S67), the speed determining unit 13 determines 6 times as the audio reproduction speed (step S68). In other words, the audio reproduction speed is increased so as to catch up with the video reproduction. On the other hand, as a result of the determination, when the audio reproduction has preceded more than the video reproduction (YES in step S67), the audio reproduction speed is decreased to two times so as to cause the video reproduction to catch up with the audio reproduction (step S69). Thus, the audio speed determining process is completed.

Thus, in the third embodiment, when a speed is temporarily changed to perform fast playback, the time difference between video and audio is measured and corrected. Thereby, it is possible to prevent the time difference between audio and image from being increased during reproduction and prevent the audio and image from being reproduced while presenting unmatched contents.

### (Fourth embodiment)

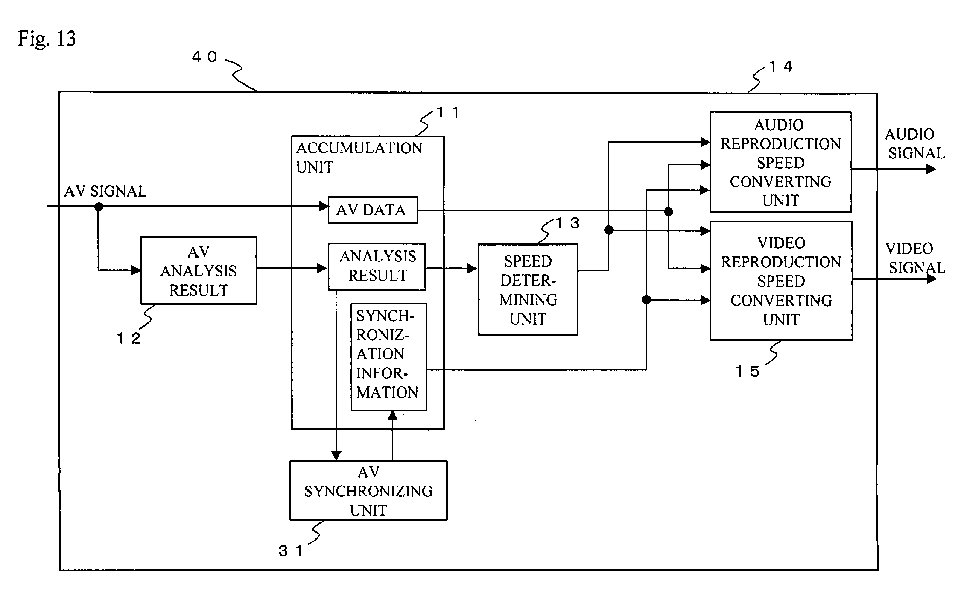

Next, a fourth embodiment of the present invention will be described with reference to FIGS. 13 to 15. In the fourth embodiment, a synchronization point is set in an arbitrary place in a program based on the analysis result saved in the accumulation unit in the above-described second embodiment, and video and audio are synchronized with each other at the synchronization point during reproduction.

FIG. 13 is a block diagram illustrating a configuration of a recording/reproduction apparatus 40 according to the fourth embodiment of the present invention. In FIG. 13, the recording/reproduction apparatus 40 basically has the same configuration as that of the recording/reproduction apparatus 20 which has been described in the second embodiment with reference to FIG. 2, except that the recording/reproduction apparatus 40 comprises an AV synchronizing unit 31. Therefore, the same parts are referenced with the same reference numerals and will not be described in detail. In FIG. 13, the AV synchronizing unit 31 obtains the analysis result saved in the accumulation unit 11, sets a place which is determined to be, for example, a scene change point, as a synchronization point, and saves the synchronization point as synchronization information into the accumulation unit 11. The audio reproduction speed converting unit 14 and the video reproduction speed converting unit 15 read out the synchronization information during reproduction, and based on this, synchronize video with audio. Here, as a synchronization method, for example, when any one of audio and video lags, a lagging audio or video portion may be skipped so that the slower one is caused to catch up with the faster one.

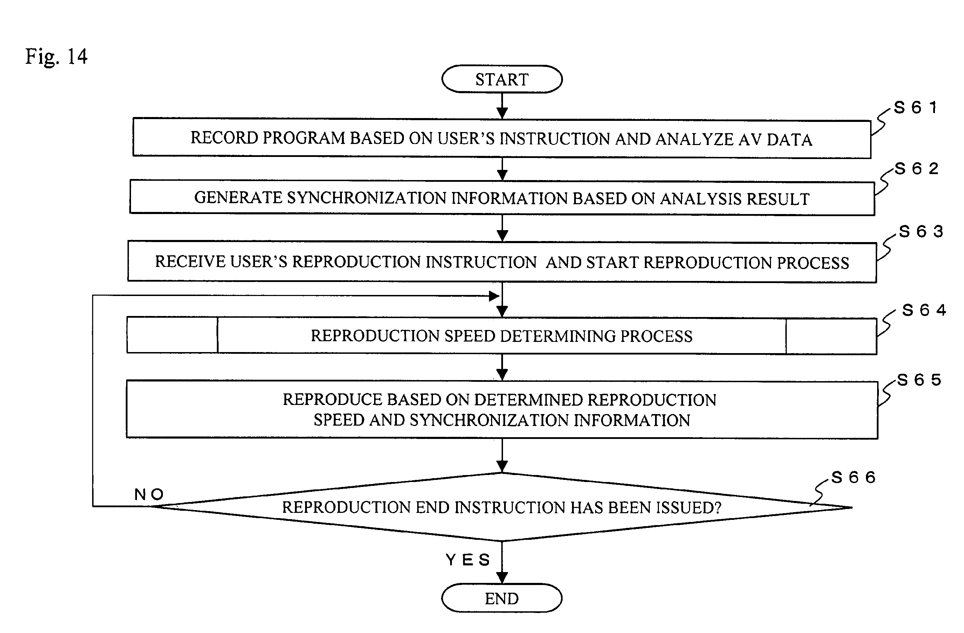

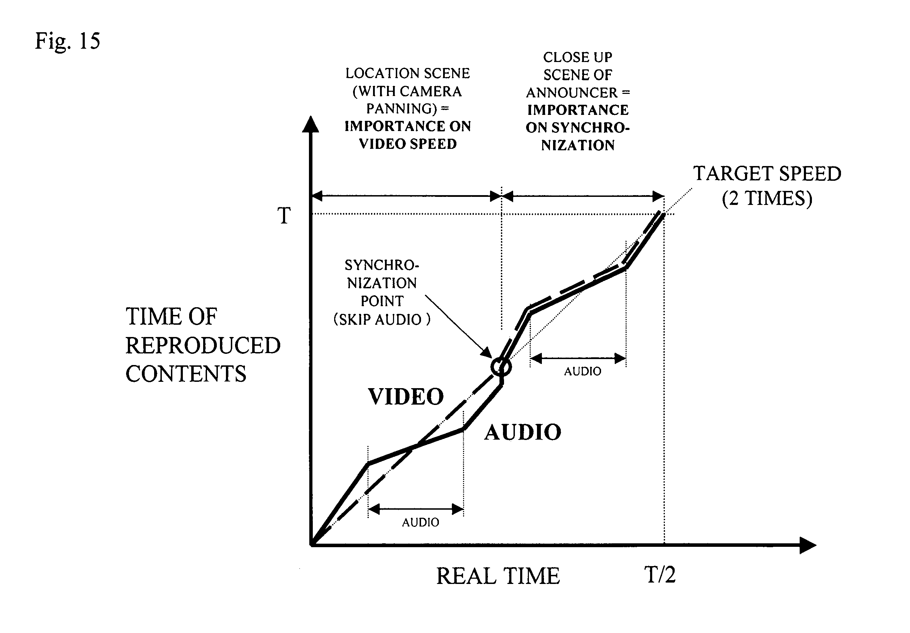

Hereinafter, a detailed operation of the recording/reproduction process of the fourth embodiment of the present invention will be described with reference to FIGS. 14 and 15. FIG. 14 is a flowchart of the recording/reproduction process of the fourth embodiment. In FIG. 14, operations of steps S61, S63, S64 and S66 are similar to those of steps S41 to S43 and S45 which have been described in the second embodiment with reference to FIG. 9, and will not be described in detail.

In FIG. 14, following step S61, the AV synchronizing unit 31 generates the synchronization information (step S62). The process of step S62 will be more specifically described. Initially, the AV synchronizing unit 31 reads the analysis result saved in the accumulation unit 11. Next, the AV synchronizing unit 31 extracts a place in a program which has been analyzed as a scene change point, for example. Next, the AV synchronizing unit 31 detects which of video and audio has preceded more (the degree of deviation of synchronization, a time difference, etc.) at each scene change point. Next, the AV synchronizing unit 31 calculates which of video and audio is skipped by what amount so as to synchronize the video with the audio, at each scene change point. Thereafter, the AV synchronizing unit 31 sets each extracted scene change point as a synchronization point. Further, the AV synchronizing unit 31 associates information indicating the skip contents at each synchronization point (hereinafter referred to as skip information) with each synchronization point. Thereafter, the synchronization point and the skip information are saved as the synchronization information into the accumulation unit 11. Thus, the process of step S62 is completed.

Following the above-described step S62, after the processes of steps S63 and S64, in step S65 the audio reproduction speed converting unit 14 and the video reproduction speed converting unit 15 perform a process which is similar to that of step S43 of the above-described second embodiment, to reproduce video and audio. In this case, the audio reproduction speed converting unit 14 and the video reproduction speed converting unit 15 reference the above-described synchronization information, and if video or audio being reproduced reaches a synchronization point, performs reproduction while skipping video or audio based on the skip information associated with the synchronization point.

Thus, in the fourth embodiment, a synchronization point can be previously set based on the analysis result. A deviation between video and audio of a reproduced program is corrected at the synchronization point. Thereby, it is possible to finely correct the deviation between video and audio.

FIG. 15 is a diagram illustrating an exemplary reproduction speed when the synchronization process of the fourth embodiment is performed. In FIG. 15, audio lags behind video at a synchronization point (scene change portion). Therefore, audio is skipped so that video and audio are synchronized with each other.

Note that, regarding the setting of a synchronization point, a tolerable range for a deviation between audio and video may be provided, and only when a point exceeds the tolerable range, the point may be set as a synchronization point. Further, the tolerable range may be changed as appropriate, depending on scenes, based on the analysis result obtained from the AV analyzing unit 12. For example, the following control may be performed: in the case of a scene having a significant motion (sports, etc.) or a scene having pan video (a landscape, etc.), the tolerable range for synchronization deviation is set to be as large as several seconds, and conversely, in the case of a scene in which an announcer speaks, the tolerable range for synchronization deviation is set to be as small as several tens of milliseconds to several hundreds of milliseconds. Also, for example, the number of synchronization points (frequency of synchronization) or the tolerable range for synchronization deviation, may be set in advance by the user.

### INDUSTRIAL APPLICABILITY

The recording/reproduction method, the recording/reproduction apparatus, and the recording medium storing the recording/reproduction program, of the present invention, can analyze both audio and image to control reproduction speeds of both the audio and image, depending on scenes, and are useful for applications, such as an accumulation type video recorder, personal computer software for editing, and the like.

## Claims

1. A recording/reproduction apparatus comprising:
an AV data accumulation unit for accumulating an audio signal and a video signal;
an AV data analyzing unit for analyzing feature amounts of the audio signal and the video signal accumulated in the AV data accumulation unit;
a speed determining unit for determining reproduction speeds of the audio signal and the video signal separately based on the feature amounts of the audio signal and the video signal analyzed by the AV data analyzing unit;
an audio reproduction speed converting unit for changing the reproduction speed of the audio signal based on the audio reproduction speed determined by the speed determining unit; and
an image reproduction speed converting unit for changing the reproduction speed of the video signal based on the video reproduction speed determined by the speed determining unit.

2. The recording/reproduction apparatus according to claim 2, wherein
the AV data analyzing unit performs the analysis when the audio signal and the video signal are accumulated into the AV data accumulation unit, and saves a result of the analysis in association with the audio signal and the video signal, and
the speed determining unit determines the reproduction speeds of the audio signal and the video signal based on the result of the analysis.

3. The recording/reproduction apparatus according to claim 1 or 2, further comprising:
a time difference calculating unit for calculating a time difference between the audio signal and the video signal being reproduced,
wherein the speed determining unit determines a reproduction speed of one of the audio signal and the video signal, depending on the time difference calculated by the time difference calculating unit.

4. The recording/reproduction apparatus according to claim 2, further comprising:
an AV synchronizing unit for generating synchronization information for synchronizing the audio signal with the video signal, based on the feature amounts of the audio signal and the video signal analyzed by the AV data analyzing unit,
wherein the audio reproduction speed converting unit and the video reproduction speed converting unit synchronize the audio signal with the video signal based on the synchronization information.

5. The recording/reproduction apparatus according to claim 1, wherein
the AV data analyzing unit has a face image detecting unit for detecting a face image from the feature amount of the video signal, and
the speed determining unit determines the reproduction speed, depending on a result of the detection of the face image.

6. The recording/reproduction apparatus according to claim 1, wherein
the AV data analyzing unit has a motion vector detecting unit for detecting a motion vector from the feature amount of the video signal, and
the speed determining unit determines the reproduction speed, depending on a result of the detection of the motion vector.

7. The recording/reproduction apparatus according to claim 1, wherein
the speed determining unit outputs, to the image reproduction speed converting unit, a signal indicating an instruction to change a reproduction mode between a first reproduction mode in which the video signal is reproduced at a previously determined reproduction speed, and a second reproduction mode in which the video signal is reproduced at a reproduction speed which is caused to follow the reproduction speed of the audio signal, based on the feature amounts analyzed by AV data analyzing unit, and
the image reproduction speed converting unit changes the reproduction speed of the video signal based on a reproduction mode designated by the speed determining unit.

8. The recording/reproduction apparatus according to claim 7, wherein
the AV data analyzing unit has a face image detecting unit for determining a face image from a feature amount of a video signal, and
the speed determining unit outputs, to the image reproduction speed converting unit, a signal indicating an instruction to reproduce a video signal in which the face image has not been detected in the first reproduction mode, and reproduce a video signal in which the face image has been detected in the second reproduction mode.

9. The recording/reproduction apparatus according to claim 7, wherein
the AV data analyzing unit has a motion vector detecting unit for detecting a motion vector of video from a feature amount of a video signal, and
the speed determining unit outputs, to the image reproduction speed converting unit, a signal indicating an instruction to reproduce a video signal in which the motion vector has a predetermined value or more in the first reproduction mode, and reproduce a video signal in which the motion vector has the predetermined value or less in the second reproduction mode.

10. A recording/reproduction method comprising:
an AV data accumulation step of accumulating an audio signal and a video signal;
an AV data analyzing step of analyzing feature amounts of the audio signal and the video signal accumulated in the AV data accumulation step;
a speed determining step of determining reproduction speeds of the audio signal and the video signal based on the feature amounts of the audio signal and the video signal analyzed in the AV data analyzing step;
an audio reproduction speed converting step of changing the reproduction speed of the audio signal based on the audio reproduction speed determined in the speed determining step; and
an image reproduction speed converting step of changing the reproduction speed of the video signal based on the video reproduction speed determined in the speed determining step.

11. A recording medium storing a recording/reproduction program for causing a computer of a recording/reproduction apparatus comprising an AV data accumulating unit for accumulating an audio signal and a video signal, to execute:
an AV data accumulation step of accumulating an audio signal and a video signal;
an AV data analyzing step of analyzing feature amounts of the audio signal and the video signal accumulated in the AV data accumulation step;
a speed determining step of determining reproduction speeds of the audio signal and the video signal based on the feature amounts of the audio signal and the video signal analyzed in the AV data analyzing step;
an audio reproduction speed converting step of changing the reproduction speed of the audio signal based on the audio reproduction speed determined in the speed determining step; and
an image reproduction speed converting step of changing the reproduction speed of the video signal based on the video reproduction speed determined in the speed determining step.

12. An integrated circuit for use in a recording/reproduction apparatus comprising an AV data accumulation unit for accumulating an audio signal and a video signal, the integrated circuit comprising:
an AV data analyzing unit for analyzing feature amounts of the audio signal and the video signal accumulated in the AV data accumulation unit;
a speed determining unit for determining reproduction speeds of the audio signal and the video signal separately based on the feature amounts of the audio signal and the video signal analyzed by the AV data analyzing unit;
an audio reproduction speed converting unit for changing the reproduction speed of the audio signal based on the audio reproduction speed determined by the speed determining unit; and
an image reproduction speed converting unit for changing the reproduction speed of the video signal based on the video reproduction speed determined by the speed determining unit.
